# EUROPÄISCHE PATENTSCHRIFT

(11) **EP 2 653 760 B1**
(45) Veröffentlichungstag und Bekanntmachung des Hinweises auf die Patenterteilung: **06.06.2018**
(21) Anmeldenummer: 12164713.5
(22) Anmeldetag: 19.04.2012
(51) Int. Cl.: F16K 31/02

(54) **Anordnung zum Verstellen eines um eine Drehachse drehbaren Bauteils**
Assembly for adjusting a component that can rotate around a rotation axis
Agencement destiné au réglage d'un composant tournant autour d'un axe

(43) Veröffentlichungstag der Anmeldung: 23.10.2013
(73) Patentinhaber: Unovatis GmbH, 38229 Salzgitter (DE)
(72) Erfinder: Deister, Elmar, 31162 Bad Salzdetfurth (DE)
(74) Vertreter: Döring, Roger

(56) Entgegenhaltungen:
- DE-A1- 3 900 477
- DE-T2- 69 809 656
- DE-U1-202009 008 830

## Beschreibung

Die Erfindung bezieht sich auf eine Anordnung gemäß dem Oberbegriff des Patentanspruchs 1.

Eine solche Anordnung ist beispielsweise in der DE 698 09 656 T2 beschrieben.

Ein drehbares Bauteil im Sinne der Erfindung ist eine Klappe, mittels derer der lichte Querschnitt eines Rohres oder eines Strömungskanal verändert und im Extremfall verschlossen werden kann. Ein bei dieser Anordnung eingesetztes Element aus einer Form-Gedächtnis-Legierung (FGL) ist an sich bekannt. Eine solche FGL hat beispielsweise die Komponenten Nickel, Titan und Kupfer. Sie ist beispielsweise in der DE 198 10 640 C2 beschrieben. Ein Element aus einer FGL erhält durch thermische und mechanische Behandlung ein Formgedächtnis mit der Maßgabe eingeprägt, daß es nach einer Verformung aus dieser eingeprägten Form heraus in eine andere Form bei Erwärmung in die eingeprägte Form zurückgeht, und zwar mit erheblicher Kraftentwicklung. Ein FGL-Element kann bei Fortfall der Erwärmung in einer gegebenen Position gehalten oder mit relativ geringem Kraftaufwand, beispielsweise mittels einer Feder, wieder in die durch die erwähnte Verformung erreichte andere Form zurückgebracht werden.

Die eingangs erwähnte Anordnung nach der DE 698 09 656 T2 wird zur Ansteuerung eines drehbaren Deflektors eingesetzt. Der Deflektor ist fest mit einem strangförmigen Torsionselement verbunden, das aus einer FGL besteht und zu seiner Aktivierung an eine elektrische Stromquelle angeschlossen werden kann. Es wird dann direkt durch elektrischen Strom erwärmt und geht in seine dem eingeprägten Formgedächtnis entsprechende Form zurück. Mit dem Torsionselement ist außerdem eine Spiralfeder verbunden, welche das Torsionselement in einer gegenüber der als Formgedächtnis eingeprägten Form verdrehten Form hält. Wenn das Torsionselement durch Einschalten der Stromquelle erwärmt wird, dreht es sich unter Mitnahme des Deflektors in Richtung seiner eingeprägten Form zurück. Der Deflektor kann dadurch in unterschiedliche Positionen gedreht werden. Wegen des direkten Anschlusses von elektrischem Strom an das Torsionselement muß die Anordnung insgesamt berührungssicher elektrisch isoliert werden.

Der Erfindung liegt die Aufgabe zugrunde, die eingangs geschilderte Anordnung einfacher zu gestalten.

Diese Aufgabe wird bei einer Anordnung gemäss den oberbegrifflichen Merkmalen des Patentanspruchs 1 entsprechend den kennzeichnenden Merkmalen des Patentanspruchs 1 gelöst.

Bei dieser Anordnung sind die Torsionselemente und die für ihre Erwärmung eingesetzten Heizelemente galvanisch getrennt. Dadurch kann die ganze Anordnung auf einfache Art und Weise berührungssicher aufgebaut werden, weil die Heizelemente als Bauteile mit relativ kleinen Abmessungen gut isoliert ausgeführt werden können. Als Heizelement kann bei dieser Anordnung mit Vorteil jeweils ein elektrischer Widerstand eingesetzt werden, der sich nach Anschalten an eine Stromquelle schnell erwärmt und dadurch zu einer schnellen Reaktion des jeweiligen Torsionselements führt. Die von dem Heizelement erzeugte Wärme wird durch das gut wärmeleitende Rohr, das dicht am zu erwärmenden Torsionselement anliegt, unmittelbar und schnell auf dasselbe übertragen. In bevorzugter Ausführungsform wird als Heizelement ein elektrischer PTC-Widerstand verwendet.

In der Drehachse der Klappe sind zwei voneinander getrennte Torsionselemente angeordnet, die bei Erwärmung in zueinander entgegengesetzter Richtung drehen, um in ihre dem eingeprägten Formgedächtnis entsprechende Form zurückzugelangen. Jedes dieser Torsionselemente ist von einem eigenen Rohr umgeben und mit einem eigenen Heizelement ausgerüstet. Es wird stets nur eines der Torsionselemente erwärmt, das bei seiner Drehung das andere Torsionselement mitnimmt und dadurch quasi als Rückstellelement für dasselbe dient. Ein gesondertes Rückstellelement ist bei dieser Anordnung nicht erforderlich.

Die mit der Anordnung nach der Erfindung zu verstellende Klappe ist in der Rohrleitung so angeordnet, dass der lichte Querschnitt der Rohrleitung mit den Endlagen "offen" und "geschlossen" verändert werden kann.

Ausführungsbeispiele des Erfindungsgegenstandes sind in den Zeichnungen dargestellt.

Es zeigen:
Fig. 1 in schematischer Darstellung eine Anordnung mit einer in einer Rohrleitung drehbar angeordneten, mit Torsionselementen nach der Erfindung ausgerüsteten Klappe.
Fig. 2 die Anordnung nach Fig. 1 mit um 90° gedrehter Klappe.
Fig. 3 ein Torsionselement nach Fig. 1 in ergänzter Ausführungsform, in vergrößerter Darstellung.
Fig. 4 eine gegenüber Fig. 1 abgewandelte, erfindungsgemässe Ausführungsform der Anordnung.
Fig. 5 Einzelheiten aus Fig. 4 in ergänzter Ausführungsform, in vergrößerter Darstellung.
Fig. 6 die Anordnung nach Fig. 1 mit einer weiteren Ergänzung.

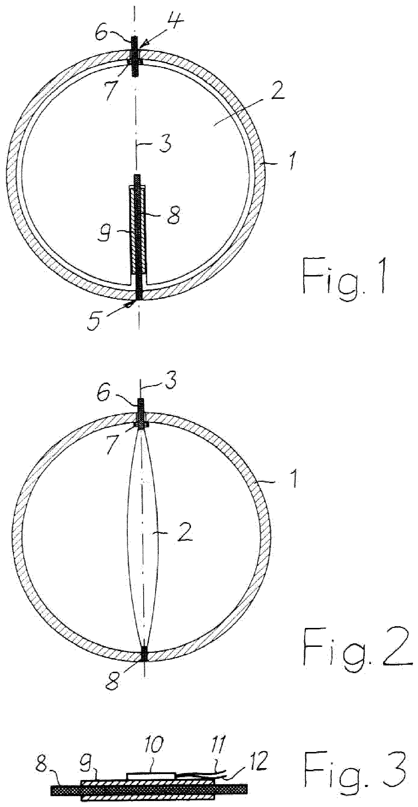

In Fig. 1 ist schematisch eine in einer Rohrleitung 1 angeordnete Klappe 2 dargestellt, die um eine strichpunktiert eingezeichnete Drehachse 3 drehbar ist. In der in Fig. 1 dargestellten Position ist die Rohrleitung 1 durch die Klappe 2 verschlossen. Bei einer Drehung um 90° gibt die Klappe 2 gemäß Fig. 2 den lichten Querschnitt der Rohrleitung 1 im wesentlichen frei. Die Klappe 2 ist in der Rohrleitung 1 an zwei einander diametral gegenüber liegenden Stellen 4 und 5 drehbar gelagert. An der Stelle 4 ist ein in eine Bohrung der Rohrleitung 1 eingreifender Zapfen 6 angeordnet, mit dem die Klappe 2 fest verbunden ist. Um den Zapfen 6 herum ist mit Vorteil eine Rückstellfeder 7 angeordnet, durch welche die Klappe 2 beispielsweise in ihre aus Fig. 2 ersichtliche Offenstellung als eine Endlage gebracht werden kann.

Zum Drehen der Klappe 2 um die Drehachse 3 ist in derselben ein in der Wandung der Rohrleitung 1 befestigtes, strangförmiges Torsionselement 8 angeordnet, das aus einer FGL besteht. Das Torsionselement 8 ist von einem dicht an demselben anliegenden Rohr 9 aus einem Material mit guter Wärmeleitfähigkeit umgeben. Es besteht mit Vorteil aus Aluminium oder einer Aluminiumlegierung. Das Torsionselement 8 ist fest mit der Klappe 2 verbunden.

An dem Rohr 9 ist gemäß Fig. 3 außen ein elektrisches Heizelement 10 angebracht, das durch eine elektrisch isolierende Schicht galvanisch vom Rohr 9 getrennt ist. Das Heizelement 10 kann über elektrische Adern 11 und 12 mit einer elektrischen Spannungsquelle verbunden werden. Das Rohr 9 soll das Torsionselement 8 auf seiner Länge so weit wie möglich und sinnvoll umgeben. Seine Länge soll mit Vorteil mindestens 80 % der Länge des Torsionselements 8 betragen. Zur Verbesserung des Wärmeübergangs zwischen Rohr 9 und Torsionselement 8 besteht die elektrisch isolierende Schicht aus einem gut wärmeleitenden Material.

Das Heizelement 10 ist elektrisch gut isoliert am Rohr 9 angebracht und mit Vorteil mit einer feuchtigkeitsdichten Abdeckung versehen. Zur einfachen Anbringung des Heizelements 10 kann das Rohr 9 eine quadratische Außenkontur mit vier ebenen Flächen haben. Auf einer dieser Flächen kann das Heizelement 10 montiert sein, so wie es beispielsweise in der DE 20 2009 008 830 U1 beschrieben ist. Als Heizelement 10 kann mit Vorteil ein elektrischer Widerstand eingesetzt werden, und zwar in bevorzugter Ausführungsform ein PTC-Widerstand.

Das Torsionselement 8 soll beispielsweise in der aus Fig. 2 ersichtlichen Offenstellung der Klappe 2 durch die Rückstellfeder 7 gehalten sein. Es ist in diese Offenstellung aus seiner dem eingeprägten Formgedächtnis entsprechenden Form, in welcher die Klappe 2 sich in ihrer Schließstellung als zweite Endlage befindet, durch Drehung um seine der Drehachse 3 entsprechende Achse herausgedreht worden. Bei Erwärmung durch das Heizelement 10 dreht das Torsionselement 8 unter Mitnahme der Klappe 2 um seine Achse in seine eingeprägte Form zurück. Diese entspricht als Endlage der Schließposition der Klappe 2 gemäß Fig. 1. Dabei können durch mehrfaches Ein- und Ausschalten des Heizelements 10 auch Zwischenpositionen der Klappe 2 eingestellt werden.

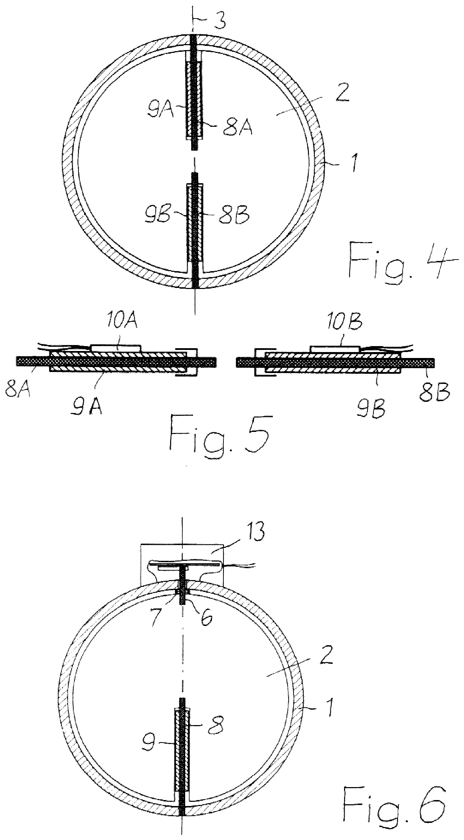

Gemäß Fig. 4 sind entsprechend der Erfindung in der Rohrleitung 1 zwei voneinander getrennte Torsionselemente 8A und 8B befestigt. Sie sind beide von einem dicht anliegenden Rohr 9A bzw. 9B umgeben und beide mit einem eigenen Heizelement 10A bzw. 10B bestückt. Die beiden Torsionselemente 8A und 8B sind gemäß Fig. 4 so eingestellt, dass sie sich bei Erwärmung in zueinander entgegengesetzter Richtung um ihre Achse drehen. Dabei muß sichergestellt sein, dass immer nur eines der Torsionselemente 8A oder 8B erwärmt wird. Das Torsionselement 8B dreht bei Erwärmung durch das Heizelement 10B die Klappe 2 beispielsweise in die aus Fig. 2 ersichtliche Offenposition. Dabei wird gleichzeitig das Torsionselement 8A aus seiner dem eingeprägten Formgedächtnis entsprechenden Form herausgedreht. Das Torsionselement 8B hat also die Funktion der Rückstellfeder 7.

Beide Torsionselemente 8A und 8B haben dementsprechend bei ihrer Erwärmung durch das zugehörige Heizelement 10A bzw. 10B für das jeweils andere Torsionselement die Funktion einer Rückstellfeder. Auf eine gesonderte Rückstellfeder kann dann also verzichtet werden. Zum Drehen der Klappe 2 in die aus Fig. 4 ersichtliche Schließposition werden das Heizelement 10B abgeschaltet und das Heizelement 10A eingeschaltet, so dass jetzt das Torsionselement 8A erwärmt wird. Es dreht dann analog zum beschriebenen Verhalten des Torsionselements 8B dasselbe aus seiner dem eingeprägten Formgedächtnis entsprechenden Form heraus, in welcher die Klappe 2 geöffnet ist.

Die Anordnung ist mit einem der Einfachheit halber nicht mit dargestellten Haltemechanismus ausgerüstet, durch welchen die Klappe 2 in ihren Endlagen gehalten ist. Es ist dann gegebenenfalls keine Dauerbeheizung der Torsionselemente erforderlich. Der Haltemechanismus kann auch mit einem die elektrische Stromzufuhr an die Heizelemente gegebenenfalls unterbrechenden Endschalter gekoppelt sein. Ein in einer Endlage der Klappe 2 gegebenenfalls vorhandener Schalter kann zum Ein- und Ausschalten anderer Geräte genutzt werden, beispielsweise von Lüftungsventilatoren.

Die Klappe 2 kann gemäß Fig. 6 beispielsweise über den Zapfen 6 mit einem elektronischen Drehwinkelgeber 13 ausgerüstet sein, durch welchen die Beheizung der Torsionselemente 8A und 8B ein- und ausgeschaltet werden kann, um beispielsweise die im Vorangehenden erwähnten Zwischenstellungen der Klappe 2 einzustellen. Ein durch die Rohrleitung 1 bewegter Volumenstrom kann dadurch beispielsweise durch ein externes Steuersignal geregelt werden.

## Patentansprüche

1. Anordnung mit einer Rohrleitung (1) und einer in derselben angebrachten, um eine Drehachse drehbaren Klappe (2), durch welche die Klappe (2) durch Drehung um die Drehachse verstellbar ist, bei welcher in der Drehachse ein strangförmiges Torsionselement (8) angeordnet ist, das aus einer Form-Gedächtnis-Legierung besteht, **dadurch gekennzeichnet,**
- **dass** die Klappe (2) in der eine Wandung aufweisenden Rohrleitung (1) an zwei einander diametral gegenüber liegenden Stellen (4,5) um ihre Achse drehbar angebracht ist, an denen zwei in der Wandung der Rohrleitung (1) befestigte Torsionselemente (8A,8B) in der Drehachse der Klappe (2) angeordnet sind,
- **dass** beide Torsionselemente (8A,8B) jeweils in einem dicht an denselben anliegenden Rohr (9) aus einem Material mit guter Wärmeleitfähigkeit angeordnet sind, an dem außen mindestens ein elektrisches Heizelement (10) angebracht ist,
- **dass** die Heizelemente (10) durch eine elektrisch isolierende Schicht galvanisch von dem jeweiligen Torsionselement (8A,8B) getrennt sind,
- **dass** beide Torsionselemente (8A,8B) sich bei Erwärmung in zueinander entgegengesetzter Richtung um ihre Achse drehen, wobei immer nur eines der beiden Torsionselemente (8A,8B) erwärmt wird, und
- **dass** die Klappe (2) in vorgegebenen Endlagen jeweils durch einen Haltemechanismus gehalten ist, mit welchem die Anordnung ausgerüstet ist.

2. Anordnung nach Anspruch 1, **dadurch gekennzeichnet, dass** als Heizelement (10) jeweils ein elektrischer Widerstand eingesetzt ist, vorzugsweise ein PTC-Widerstand.

3. Anordnung nach Anspruch 1, **dadurch gekennzeichnet, dass** die Rohre (9A,9B) mit einer ebenen Außenfläche versehen sind, auf welcher das jeweilige Heizelement (10) angebracht ist.

4. Anordnung nach Anspruch 1, **dadurch gekennzeichnet, dass** die Klappe (2) mit einem elektronischen Drehwinkelgeber (13) ausgerüstet ist.

5. Anordnung nach Anspruch 1, **dadurch gekennzeichnet, dass** im Bereich der Klappe (2) ein Schalter angeordnet ist, der in einer Endlage durch die Klappe (2) ein- und ausschaltbar ist.

## Claims

1. Arrangement with a pipe line (1) and a trap (2) which is positioned within the pipe line and rotatable around an axis of rotation, by which the trap (2) is adjustable by rotating around the axis of rotation, wherein in the axis of rotation a cord like torsion element (8) is positioned which consists of a shape-memory-alloy, **characterized in**
- **that** the trap (2) is positioned rotatably around its axis of rotation within the pipe line (1), which has a wall, at two positions opposing each other diametrally, at which two torsion elements (8A,8B) are provided in the wall of the pipe line (1) in the axis of rotation of the trap (2),
- **that** the two torsion elements (8A,8B) are placed within a tube (9) respectively which abuts firmly to the same and which consists of a material with good thermal conductivity, to which on its outside an electrical heating element (10) is fastened,
- **that** the heating elements (10) are separated from the respective torsion element (8A,8B) galvanically by an insulation layer,
- **that** both torsion elements (8A,8B) rotate on heating in opposing direction around their axis of rotation, whereby only one of the two torsion elements (8A,8B) is heated respectively, and
- **that** the trap (2) is fixed in pretended end positions respectively by a clamping mechanism which is part of the arrangement.

2. Arrangement according to claim 1, **characterized in that** an electrical resistor is used respectively as a heating element (10), preferably a PTC-resistor.

3. Arrangement according to claim 1, **characterized in that** the tubes (9A,9B) have a plane outer area, to which the respective heating element (10) is fastened.

4. Arrangement according to claim 1, **characterized in that** the trap (2) comprises an electronic angle of rotation transducer (13).

5. Arrangement according to claim 1, **characterized in that** an interruptor is provided in the area of the trap (2) which in an end position is to be switched on and off by the trap (2).

## Revendications

1. Agencement avec une conduite (1) et un clapet (2) installé dans celle-ci et pouvant tourner autour d'un axe de rotation, par lequel le clapet (2) peut être réglé par rotation autour de l'axe de rotation, dans lequel un élément de torsion en forme de tige (8), qui est constitué d'un alliage à mémoire de forme, est disposé dans l'axe de rotation,
**caractérisé en ce**
- le que clapet (2) est installé de façon rotative autour de son axe dans la conduite (1) présentant une paroi en deux endroits (4, 5) diamétralement opposés l'un à l'autre, auxquels deux éléments de torsion (8A, 8B) fixés dans la paroi de la conduite (1) sont disposés dans l'axe de rotation du clapet (2),
- **que** les deux éléments de torsion (8A, 8B) sont disposés respectivement dans un tube (9) en un matériau à bonne conductibilité thermique étroitement appliqué sur celui-ci, et sur lequel au moins un élément chauffant électrique (10) est appliqué extérieurement,
- **que** les éléments chauffants (10) sont séparés électriquement de l'élément de torsion respectif (8A, 8B) par une couche électriquement isolante,
- **que** les deux éléments de torsion (8A, 8B) tournent autour de leur axe dans des sens opposés l'un à l'autre lors du chauffage, dans lequel on ne chauffe toujours qu'un seul des deux éléments de torsion (8A, 8B), et
- **que** le clapet (2) est maintenu dans des positions finales prédéterminées respectivement au moyen d'un mécanisme de retenue, dont l'agencement est équipé.

2. Agencement selon la revendication 1, **caractérisé en ce que** l'on utilise comme élément chauffant (10) respectivement une résistance électrique, de préférence une résistance CTP.

3. Agencement selon la revendication 1, **caractérisé en ce que** les tubes (9A, 9B) sont dotés d'une face extérieure plane, sur laquelle l'élément chauffant respectif (10) est installé.

4. Agencement selon la revendication 1, **caractérisé en ce que** le clapet (2) est muni d'un détecteur d'angle de rotation électronique (13).

5. Agencement selon la revendication 1, **caractérisé en ce qu'**un interrupteur, qui peut être fermé et ouvert par le clapet (2) dans une position finale, est disposé dans la région du clapet (2).
